# NEW EUROPEAN PATENT SPECIFICATION

(11) **EP 2 382 087 B2**
(45) Date of publication and mention of the opposition decision: **04.11.2020**
(45) Mention of the grant of the patent: 06.12.2017
(21) Application number: 09747831.7
(22) Date of filing: 04.11.2009
(51) Int. Cl.: C22C 21/02, B23K 35/28, B23K 35/38, B23K 35/02, B32B 15/01

(54) **PROCESS FOR FLUXLESS BRAZING OF ALUMINIUM AND BRAZING SHEET FOR USE THEREIN**
VERFAHREN ZUM FLUSSMITTELFREIEN LÖTEN VON ALUMINIUM UND LÖTBLECH ZUR VERWENDUNG DARIN
Procédé pour le brasage d'aluminium sans flux et feuille de brasage correspondante

(30) Priority: 10.11.2008 EP 08168713; 10.11.2008 US 112823 P
(43) Date of publication of application: 02.11.2011
(73) Proprietor: Aleris Rolled Products Germany GmbH, 56070 Koblenz (DE)
(72) Inventor: WITTEBROOD, Adrianus Jacobus, 1991 HB Velserbroek (NL)
(74) Representative: Dey, Michael
(86) International application number: PCT/EP2009/064586
(87) International publication number: WO 2010/052231

(56) References cited:
- EP-A- 1 306 207
- EP-A- 1 430 988
- EP-A- 1 686 343
- WO-A1-2010/052231
- DE-A1- 1 962 760
- DE-A1- 2 337 924
- DE-A1- 2 425 155
- GB-A- 2 390 099
- GB-A- 2 390 099
- US-A- 4 908 184
- US-B1- 6 627 330
- Schmatz et al: "A Fluxless Process for Brazing Aluminium Heat Exchangers in Inert Gas", Welding Journal, October 1983 (1983-10), pages 31-38,

## Description

### FIELD OF THE INVENTION

This invention relates to a process for brazing an aluminium alloy in a controlled atmosphere without using a brazing flux material, and to the use of an aluminium-silicon filler alloy in a controlled atmosphere brazing process.

### BACKGROUND TO THE INVENTION

There are various brazing processes in use for the industrial scale manufacturing of heat exchangers.

There is vacuum brazing which is carried out at relatively low atmosphere pressure in the order of about 1.10⁻⁵ mbar or less, and is an essentially discontinuous process and puts high demands on material cleanliness. To obtain the optimum conditions for joining to take place, aluminium alloys commonly used for vacuum brazing contain purposive additions of Mg of 1% or more. The Mg destroys the hard oxide film of the filler alloy when it evaporates from the brazing sheet during brazing, and further the evaporated Mg plays the role as getter that removes oxygen and moisture remaining in the brazing furnace. There is always more magnesium present in the furnace then necessary. The excess magnesium condenses on the cold sports in the vacuum furnace and has to be removed frequently. The capital investment for suitable equipment is relatively high.

NOCOLOK™ (registered trademark of Alcan) flux brazing has been used as the principal brazing process to braze automotive heat exchangers by many heat exchanger manufacturers. Major problems that have arisen from the NOCOLOK process have been flux costs, flux handling and the damage that flux causes to the furnaces. And in complex shaped assemblies the application of the non-corrosive brazing flux prior to brazing at the interior of the assemblies is often considered very difficult and problematic. Consequently, most of the heat exchanger manufacturers have been trying to reduce flux consumption.

Another brazing process is controlled atmosphere brazing ("CAB") without using a brazing flux and this process is in particular being used for joining by means of brazing of surfaces inside a heat exchanger with are very difficult to flux.

In European patent document EP-1430988-A it is disclosed that for such a process of CAB without using a brazing flux that the brazing sheet product used contains Mg at least in a layer constituting the brazing sheet other than the filler alloy layer, typically the core alloy contains Mg in a range of 0.05% to 1.0 wt.%. Interposed between the core alloy and the filler alloy there is present a diffusion prevention layer such an a Mg-free AA3003-series aluminium alloy.

European patent document EP-1306207-B1 discloses another fluxless brazing process in an inert gas atmosphere containing very low oxygen content of up to 1000 ppm, and preferably up to 500 ppm. Furthermore there is disclosed a brazing sheet product comprising of an aluminium core alloy on one or both sides clad with an Al-Si alloy brazing alloy containing 0.1% to 5% of Mg and 0.01% to 0.5% of Bi as an intermediate layer, and a further metal layer onto the outersurface of the Al-Si alloy brazing alloy. It is disclosed that during a brazing operation the brazing material in the intermediate layer is molten as the temperature is elevated during brazing, but oxidation of the surface of the brazing material does not occur because the surface is covered with the thin metal layer which remains solid.

European patent document EP-1430988-A1 discloses in its paragraph [0015] that there is another method of inert gas atmosphere brazing called VAW method in which flux is not used. In this method, brazing is enabled in an inert gas atmosphere by adding minute amounts of Bi, Sb, Ba, Sr, Be, etc to filler alloys and destroying and removing the oxide film on the surface of the filler alloy by means of alkali etching or acid etching before braze heating. However in this method, the atmosphere must be strictly controlled to a dew point of -65°C or less and an oxygen concentration of 5 ppm or less. Moreover, pretreatment of material is necessary and strict control of the atmosphere is necessary, and it is explicitly mentioned that this method is not suitable in terms of practical use. In this document no details are disclosed about the brazing method itself nor of the exact composition of the filler alloy.

US patent no US-4,908,184 discloses a high strength, corrosion-resistant core alloy for brazing, the core alloy consists of 0.5-1.0% Cu, 0.1-0.5% Mg, 0.2-1.0% Si, and one or more of Zr, Cr and Mn each in the amount of 0.05-0.5%, and the balance of aluminium and inevitable impurities, and wherein the weight ratio of Si/Mg is in the range of 1-2.5. Optionally, Ni may be added in a range of 0.05-0.5%. Filler metals that can be applied to the core alloy include Al-Si alloys, Al-Si-Bi alloys, Al-Si-Mg alloys, Al-Si-Mg-Bi alloys.

European patent document EP-1686343-A2 discloses a heat exchanger comprising of i) a fin material having a triple-layer clad material, and ii) an aluminium alloy tube having a Zn concentrated surface, the both having been brazed to each other using a brazing material composed of an Al-Si alloy containing 6.5-13.0% Si, 0.15-0.60% Cu, and optionally 0.05-0.30% Mn.

US patent document US-2004/0028940-A1 discloses an aluminium alloy fin material for heat exchangers which has a thickness of 80 micron or less and is incorporated into a heat exchanger made of an aluminium alloy manufactured by brazing through an Al-Si alloy filler metal. When used in a vacuum brazing method, Mg is added to the filler metal in an amount of 2.0% or less. In the case of applying inert atmosphere brazing using a fluoride flux, the Mg content is preferably limited to 0.5% or less since Mg hinders brazability due to its interaction with the brazing flux.

There is a need for further improved brazing processes and brazing sheet materials in which at least the interior side of an assembly does not have to be provided with a brazing flux.

### DESCRIPTION OF THE INVENTION

It is an object of the invention to provide an alternative aluminium alloy brazing sheet material that can be applied in a controlled atmosphere fluxless brazing process without applying a brazing flux.

These and other objects and further advantages are met or exceeded by the present invention providing a process of joining of at least two aluminium alloy workpieces by means of controlled atmosphere brazing comprising of, brazing an aluminium alloy without flux in a controlled atmosphere utilizing an inert gas atmosphere, while using a brazing sheet product comprising of an aluminium alloy core upon which on at least one side a layer of filler alloy is clad, the filler clad layer having an inner-surface and an outer-surface, the inner-surface is facing the core and the outer-surface is devoid of any further metallic based layers, and wherein the filler alloy has a composition which is Na-free, Li-free, K-free, and Ca-free, and comprising, in wt.%:

| | |
|---|---|
| Si | about 3% to 15% |
| Mg | 0.05% to 0.20% |
| Bi | 0.03% to 0.2%, |
| Fe | 0 to about 0.4% |
| Mn | 0 to about 1.5%, |

Zn 0 to 0.3, Ti 0 to 0.2, Sr 0 to 0.05 and Cu 0 to 0.3, the balance aluminium and incidental impurities, wherein the filler alloy excess Mg with respect to the stoichiometric composition of Bi₂Mg₃ is 0.05% or less, the balance aluminium and incidental impurities.

As will be appreciated herein below, except as otherwise indicated, alloy designations refer to the Aluminum Association designations in Aluminum Standards and Data and the Registration Records, as published by the Aluminum Association in 2008.

For any description of alloy compositions or preferred alloy compositions, all references to percentages are by weight percent unless otherwise indicated.

For the purposes of this invention, and as used hereinafter, the term "controlled atmosphere brazing" or "CAB" refers to a brazing process which utilizes an inert atmosphere, for example, nitrogen, argon or helium in the brazing of aluminium alloy articles, and is distinct from vacuum brazing in particular in that with CAB the brazing atmosphere in the furnace during the brazing operation is at about regular atmospheric pressure, although a slight under-pressure (for example working at a pressure of 0.1 bar or more) or having a slight over-pressure can be used to facilitate the control of the inert atmosphere and to prevent an influx of oxygen containing gas into the brazing furnace. "Core" means an aluminium alloy which is the structural support for the aluminium alloy that is used as the filler. "Filler" means an aluminium alloy which is used to braze the core or other aluminium articles. "Cladding" is used to describe the use of the filler when it is overlaid on one or both surfaces of the core, optionally with the application of an intermediate layer between the core and the cladding to act as a diffusion barrier or to improve on the corrosion resistance of the product after brazing. Thereafter, the clad core is called a composite or a brazing sheet. "Fillet" means a concave junction between two surfaces.

The process according to this invention allows for the manufacture of brazed assemblies incorporating aluminium workpieces, and wherein a controlled atmosphere brazing process is utilised in which at least the interior side of an assembly does not have to be provided with a brazing flux. It has been found that also the exterior side of an assemby does not need to be provided with a brazing flux.

The filler alloy is free of each of the elements Na, Li, K, and Ca to avoid any interference with the Bi and Mg during the brazing operation. With "free" is meant that no purposeful addition of Na, Li, K, and Ca was made to the chemical composition but that due to impurities and/or leaking from contact with manufacturing equipment, trace quantities of Na, Li, K, and Ca may nevertheless find their way into the filler alloy product.

It is another important feature of the invention that the brazing sheet product used in the method is devoid of any further metallic layer applied onto the outersurface of the filler alloy, which are added in the prior art to facilitate the controlled atmosphere brazing operation. In accordance with this invention it has been found that a very good filler formation is achieved in a controlled atmosphere brazing process without the use of a brazing flux material, such as for example used in the NOCOLOK brazing process, and without the use of a Ni- or Ni-alloy layer used in the prior art to facilitate the fluxless CAB operation, for example as disclosed in international application WO-01/068312 in which also the use of a bonding layer between the AlSi clad layer and the Ni-layer is disclosed. It is considered to be known in the art that instead of a Ni-layer also an Fe-layer or a Co-layer, or alloys thereof, can be used to facilitate a fluxless brazing operation, although Fe- and Co-layers are used on a less preferred basis than Ni-layers. Other metallic layers described in the prior art to facilitate fluxless or flux-free brazing in a CAB environment are for example disclosed in European patent document EP-1306207-B1, where a top-layer of an AA1xxx-series aluminium alloy having a melting point higher than the AlSi filler alloy is being applied. It is an important feature of the present invention that such metallic layers are no longer required when the filler alloy of this invention is being used in the controlled atmosphere brazing operation. This leads to considerable costs saving when producing the brazing sheet product. And furthermore, the use of for example a Ni-layer results in a reduced corrosion resistance of the product in the post-braze condition, which disadvantage does not occur in the present invention.

Several advantages are obtained by the present filler material in the controlled atmosphere brazing process. The present invention is a truly fluxless aluminium brazing process that does not require a vacuum furnace, brazing flux like a fluoride flux (e.g. NOCOLOK™) or other costly, unique capital equipment. The parts or workpieces are brazed in a furnace containing an inert gas, a non-oxidizing gas preferably nitrogen or argon. The preferred incoming gas has about 500 ppm of oxygen or less, and more preferably of 100 ppm of oxygen or less. By carefully controlling the amount of Mg and Bi in the filler alloy, both elements are purposively added to the filler alloy, good fillet formation is obtained in the fluxless controlled atmosphere brazing process. Only Bi is being added to the filler alloy.

In a preferred embodiment the Bi content is in a range of at least 0.06%, and more preferably of at least 0.08%. A preferred upper-limit for the Bi content is 0.14%. Typically the Bi is added in an amount of about 0.1%.

The Mg content in the filler alloy should be carefully controlled. The upper-limit for the Mg addition is 0.20%. At present the quality and control mechanisms when producing aluminium brazing sheet allow for the target and the control of Mg within an accuracy of ±0.01% or better. A too high Mg content in the filler alloy results in an undesirable interaction with any oxygen in the controlled inert gas atmosphere and disrupts the formation of a smooth and acceptable fillet. Solely Bi is being added to the filler alloy and therefore the excess Mg content with respect to the stoichiometric composition of Bi₂Mg₃ is 0.05% or less, but more than 0%. It has been found that Bi has a low solubility in aluminium and tends to separate out at the grain boundaries even when added at low levels of for example 0.1%. This can result in an undesirable white dusty appearance of the brazing sheet when kept on stock for a long period of time. To overcome this effect a small amount of Mg will form Bi₂Mg₃ which stops separation at the grain boundaries. This Bi₂Mg₃ phase will however dissolve in the filler alloy at melting of the brazing material releasing the Bi to lower the surface tension of the molten filler.

The Si content in the filler alloy should be in the range of about 3% to about 15%, and preferably in the range of about 6% to 12%.

The amount of Fe present in the filler alloy depends primarily on the origin of the alloy material and can be up to 0.4%. As grain refiner element Ti can be present in the brazing material in a range of up to about 0.2%, preferably up to 0.15%.

Mn can be present in the filler alloy in a range of 0 to about 1.5%. When present as impurity it can be tolerated to 0.3%. However, it may also be purposively added in a range of 0.3% to 1.5%. A more preferred upper-limit for the Mn addition is 1.0%.

The balance is made by unavoidable or incidental impurities, typically each 0.05% maximum, and the total 0.15% maximum, and aluminium. The filler alloy may further contain Zn to favourably lower the corrosion potential of the brazing sheet. If not purposively added Zn can be tolerated as impurity element up to 0.3%. In a range of up to 0.3% Cu is tolerable as impurity element. The filler alloy it may further Sr in a range of 0 to 0.05% to modify the silicon in the filler alloy and to improve the flowability of the molten filler in the brazing operation.

In another embodiment the filler alloy has a composition which is Na-free, Li-free, K-free, and Ca-free, and consists of, in wt.%:

| | |
|---|---|
| Si | 3% to 15% |
| Mg | 0.05% to 0.20%, |
| Bi | 0.03% to 0.2%, preferably 0.06 to 0.14%, |
| Fe | 0 to 0.4% |
| Mn | 0 to 1.5% |
| Zn | 0 to 0.3% |
| Cu | 0 to 0.3% |
| Ti | 0 to 0.15% |
| Sr | 0 to 0.05%, |

the balance aluminium and incidental impurities, wherein the filler alloy excess Mg with respect to the stoichiometric composition of Bi₂Mg₃ is 0.05% or less.

The filler material is clad to aluminium core alloys to form brazing sheet, including clad fin stock, preferably the core alloy is made of an aluminium alloy from the 2xxx, 3xxx, 5xxx, 6xxx or 7xxx-series alloys, for example an AA3003, AA3005, AA6060 or AA6063-type alloy.

In an embodiment a further metal can be interposed between the core alloy layer and the filler alloy clad material. For example a further aluminium alloy layer may be applied for example to limit diffusion of alloying elements from the core layer to the filler layer or to further improve on the corrosion performance of the brazing sheet product.

The brazing sheet material used according to this invention can be manufactured via various techniques. For example by roll bonding as is well known in the art. Alternatively the filler alloy layer can be applied onto the core alloy layer by means of thermal spraying techniques. Or alternatively the core alloy layer and the filler alloy clad material can be manufactured by means of casting techniques, for example as disclosed in international application WO-2004/112992.

Ideally, when assembling the components into an assembly suitable for joining by controlled atmosphere brazing utilizing an inert gas atmosphere, one side of the brazing sheet of the invention having aluminium-silicon filler is being kept inside the assembly forming the brazing sheet to constitute a hollow structure. While using such a brazing sheet product there is no need to apply a flux in order to obtain a good joint with the brazing operation. Thus in another aspect of the invention there is provided a method of manufacturing an assembly of brazed components, comprising the steps of:
(i) forming the components of which at least one is made from an aluminium alloy brazing sheet described this the description as part of the invention;
(ii) assembling the components into an assembly, and wherein one side of the brazing sheet having aluminium-silicon filler alloy with balanced addition of Mg and Bi is being kept inside the assembly to constitute a hollow structure;
(iii) joining the components by brazing the assembly without applying flux in the hollow structure and without applying a flux on the outside of the assembly of components and brazing the whole assembly in an inert gas atmosphere at a brazing temperature for a period long enough for melting and spreading of the filler material;
(iv) cooling the brazed assembly, typically to below 100°C.

In another aspect of the invention it relates to a novel use or method of use of such a filler alloy in a fluxless controlled atmosphere brazing process utilizing an inert gas atmosphere. The aluminium filler alloy being described as herein above and set forth in the claims, together with its preferred embodiments.

In particular it relates to the use of an aluminium-silicon filler alloy in a process joining of at least two two aluminium alloy workpieces by means of brazing in a controlled atmosphere without the use of a flux, while using brazing sheet comprising of an aluminium alloy core upon which on at least one side a layer of filler alloy is clad, the filler clad layer having an inner-surface and an outer-surface, the inner-surface is facing the core and the outer-surface is devoid of any further metallic based layers, and wherein the aluminium-silicon filler has a composition which is Na-free Li-free, K-free, Ca-free, and comprising, in wt.%:

| | |
|---|---|
| Si | 3 to 15 |
| Mg | 0.05 to 0.20 |
| Bi | 0.03 to 0.2, |
| Fe | 0 to 0.4 |
| Mn | 0 to 1.5, |

Zn 0 to 0.3, Ti 0 to 0.2, Sr 0 to 0.05, Cu 0 to 0.3, the balance aluminium and incidental impurities, wherein the filler alloy excess Mg with respect to the stoichiometric composition of Bi2Mg3 is 0.05% or less.

In another embodiment relating to the use of an aluminium-silicon filler alloy in a process joining of two aluminium alloy workpieces by means of brazing in a controlled atmosphere without the use of a flux, the aluminium-silicon filler has a composition which is Na-free, Li-free, K-free, Ca-free, and consists of, in wt.%:

| | |
|---|---|
| Si | 3% to 15%, |
| Mg | 0.05% to 0.20%, |
| Bi | 0.03% to 0.2%, preferably 0.06 to 0.14%, |
| Fe | 0 to 0.4% |
| Mn | 0 to 1.5% |
| Zn | 0 to 0.3% |
| Cu | 0 to 0.3% |
| Ti | 0 to 0.15% |
| Sr | 0 to 0.05%, |

the balance aluminium and incidental impurities, wherein the filler alloy excess Mg with respect to the stoichiometric composition of Bi2Mg3 is 0.05% or less.

### EXAMPLE.

Brazing sheets have been produced consisting of a core alloy of an commercial AA3003-series alloy and a filler alloy having a composition as listed in Table 1, and wherein filler alloy 1 compared to filler alloy 2. The brazing sheets have been produced via roll bonding, and have a final gauge of 0.3 mm and the clad layer thickness was 30 micron. The clad filler alloy has been applied on one side of the core sheet only, and the outer-surface of the clad filler alloy was bare and thus devoid of any further metallic layers.

**Table 1. Alloy composition of the filler alloy, in wt.%, balance is made by aluminium and unavoidable impurities.**

| **Filler alloy** | **Alloying element** | | | |
|---|---|---|---|---|
| | **Si** | **Fe** | **Bi** | **Mg** |
| **1** | 10.8 | 0.15 | 0.1 | 0.1 |
| **2** | 11.1 | 0.15 | - | - |

The brazeability of the brazing sheet products have been assessed on a laboratory scale of testing in a small quartz furnace. Small coupons of 25 mm x 25 mm were cut from the brazing sheet products. A small strip of an AA3003 alloy measuring 30 mm x 7 mm x 1 mm was bent in the centre to an angle of 45° and laid on the coupons. The strip on the coupon samples were heated under flowing nitrogen of atmospheric pressure and having an oxygen content of less than 20 ppm, with heating from room temperature to 590°C, dwell time at 590°C for 1 minute, cooling from 590°C to room temperature. The brazed samples were assessed for the amount of fillet formed at the periphery of the AA3003 in contact with the brazing sheet products and expressed in %, for example if no fillet was formed then the amount of fillet is 0%, and when a fillet is formed around the whole periphery the amount of fillet is 100%.

It was found that the brazing sheet having the filler alloy 1 when brazed in a controlled atmosphere in the absence of a flux material had an excellent fillet formation of 100%, whereas the filler alloy 2 had a fillet formation of 0%. This example illustrates to excellent filet formation that can be obtained in a fluxless controlled atmosphere brazing operation when using brazing sheet with a filler alloy having careful controlled amounts of Bi and Mg, while being free from Na, Li, K, and Ca, and having no metallic layers, such as Ni or Co or a 1xxx-series clad layer, which are disclosed in the prior art as being required to facilitate the brazing operation.

## Claims

1. A process for controlled atmosphere brazing comprising, brazing an aluminium alloy without flux in a controlled atmosphere utilizing an inert gas atmosphere, while using brazing sheet comprising of an aluminium alloy core upon which on at least one side a layer of filler alloy is clad, the filler clad layer having an inner-surface and an outer-surface, the inner-surface is facing the core and the outer-surface is devoid of any further metallic based layers, and wherein the filler alloy has a composition which is Na-free, Li-free, K-free, and Ca-free, and comprising, in wt.%:
| | |
|---|---|
| Si | 3 to 15, |
| Mg | 0.05 to 0.20, |
| Bi | 0.03 to 0.2, |
| Fe | 0 to 0.4, |
| Mn | 0 to 1.5, |
| Zn | 0 to 0.3, |
| Ti | 0 to 0.2 |
| Sr | 0 to 0.05, and |
| Cu | 0 to 0.3, |
the balance aluminium and incidental impurities,
wherein the filler alloy excess Mg with respect to the stoichiometric composition of Bi2Mg3 is 0.05% or less.

2. The process for controlled atmosphere brazing according to claim 1, wherein the filler alloy has a Bi-content in a range of 0.06% to 0.2%, preferably in a range of 0.06% to 0.14%.

3. The process for controlled atmosphere brazing according to any one of claims 1 or 2, wherein the filler alloy has a composition which is Na-free, Li-free, K-free, and Ca-free, and consists of, in wt.%:
| | |
|---|---|
| Si | 3% to 15% |
| Mg | 0.05% to 0.20%, |
| Bi | 0.03% to 0.2%, |
| Fe | 0 to 0.4% |
| Mn | 0 to 1.5% |
| Zn | 0 to 0.3% |
| Cu | 0 to 0.3% |
| Ti | 0 to 0.15% |
| Sr | 0 to 0.05%, |
the balance aluminium and incidental impurities.

4. The process for controlled atmosphere brazing according to any one of claims 1 or 2, wherein the filler alloy has a composition which is Na-free, Li-free, K-free, and Ca-free, and consists of, in wt.%:
| | |
|---|---|
| Si | 3% to 15% |
| Mg | 0.05% to 0.20%, |
| Bi | 0.03% to 0.2%, preferably 0.06 to 0.14%, |
| Fe | 0 to 0.4% |
| Mn | 0 to 1.5% |
| Zn | 0 to 0.3% |
| Cu | 0 to 0.3% |
| Ti | 0 to 0.15% |
| Sr | 0 to 0.05%, |
the balance aluminium and incidental impurities.

5. The process for controlled atmosphere brazing according to any one of claims 1 to 4, wherein the said controlled atmosphere is a non-oxidizing gas, preferably containing less than 500 ppm of oxygen.

6. Use of an aluminium-silicon filler alloy in a process joining of two aluminium alloy workpieces by means of brazing in a controlled atmosphere without the use of a flux, while using brazing sheet comprising of an aluminium alloy core upon which on at least one side a layer of filler alloy is clad, the filler clad layer having an inner-surface and an outer-surface, the inner-surface is facing the core and the outer-surface is devoid of any further metallic based layers, and wherein the aluminium-silicon filler has a composition which is Na-free, Li-free, K-free, Ca-free, and comprising, in wt.%:
| | |
|---|---|
| Si | 3 to 15 |
| Mg | 0.05 to 0.20 |
| Bi | 0.03 to 0.2, |
| Fe | 0 to 0.4 |
| Mn | 0 to 1.5, |
| Zn | 0 to 0.3%, |
| Ti | 0 to 0.2%, |
| Sr | 0 to 0.05%, |
| Cu | 0 to 0.3%, |
the balance aluminium and incidental impurities
wherein the filler alloy excess Mg with respect to the stoichiometric composition of Bi2Mg3 is 0.05% or less.

7. Use of an aluminium-silicon filler alloy in a process joining of two aluminium alloy workpieces by means of brazing in a controlled atmosphere without the use of a flux, according to claim 6, and wherein the aluminium-silicon filler has a composition which is Na-free, Li-free, K-free, Ca-free, and consists of, in wt.%:
| | |
|---|---|
| Si | 3% to 15% |
| Mg | 0.05% to 0.20%, |
| Bi | 0.03% to 0.2%, |
| Fe | 0 to 0.4% |
| Mn | 0 to 1.5% |
| Zn | 0 to 0.3% |
| Cu | 0 to 0.3% |
| Ti | 0 to 0.15% |
| Sr | 0 to 0.05%, |
the balance aluminium and incidental impurities.

8. Use of an aluminium-silicon filler alloy in a process joining of two aluminium alloy workpieces by means of brazing in a controlled atmosphere without the use of a flux, according to claim 6, and wherein the aluminium-silicon filler has a composition which is Na-free, Li-free, K-free, Ca-free, and consists of, in wt.%:
| | |
|---|---|
| Si | 3% to 15% |
| Mg | 0.05% to 0.20%, |
| Bi | 0.06 to 0.14%, |
| Fe | 0 to 0.4% |
| Mn | 0 to 1.5% |
| Zn | 0 to 0.3% |
| Cu | 0 to 0.3% |
| Ti | 0 to 0.15% |
| Sr | 0 to 0.05%, |
the balance aluminium and incidental impurities.

## Patentansprüche

1. Verfahren zum Löten in kontrollierter Atmosphäre, umfassend Löten einer Aluminiumlegierung ohne Flussmittel in einer kontrollierten Atmosphäre unter Verwendung einer Inertgasatmosphäre, während ein Lötblech umfassend einen Aluminiumlegierungskern, auf den an mindestens einer Seite eine Schicht einer Fülllegierung plattiert ist, verwendet wird, wobei die Füllplattierungsschicht eine Innenfläche und eine Außenfläche aufweist, wobei die Innenfläche dem Kern zugewandt ist und die Außenfläche frei von weiteren Schichten auf Metallbasis ist, und wobei die Fülllegierung eine Zusammensetzung aufweist, die Na-frei, Li-frei, K-frei und Ca-frei ist und umfassend in Gew.-%:
| | |
|---|---|
| Si | 3 bis 15, |
| Mg | 0,05 bis 0,20, |
| Bi | 0,03 bis 0,2, |
| Fe | 0 bis 0,4, |
| Mn | 0 bis 1,5, |
| Zn | 0 bis 0,3, |
| Ti | 0 bis 0,2 |
| Sr | 0 bis 0,05 und |
| Cu | 0 bis 0,3 |
der Rest Aluminium und zufällige Verunreinigungen,
wobei der Mg-Überschuss der Fülllegierung in Bezug auf die stöchiometrische Zusammensetzung von Bi2Mg3 0,05% oder weniger ist.

2. Verfahren zum Löten in kontrollierter Atmosphäre nach Anspruch 1, wobei die Fülllegierung einen Bi-Gehalt in einem Bereich von 0,06% bis 0,2%, vorzugsweise in einem Bereich von 0,06% bis 0,14% aufweist.

3. Verfahren zum Löten in kontrollierter Atmosphäre nach einem der Ansprüche 1 oder 2, wobei die Fülllegierung eine Zusammensetzung aufweist, die Na-frei, Li-frei, K-frei und Ca-frei ist und besteht aus, in Gew.-%:
| | |
|---|---|
| Si | 3% bis 15% |
| Mg | 0,05% bis 0,20%, |
| Bi | 0,03% bis 0,2%, |
| Fe | 0 bis 0,4% |
| Mn | 0 bis 1,5% |
| Zn | 0 bis 0,3% |
| Cu | 0 bis 0,3% |
| Ti | 0 bis 0,15% |
| Sr | 0 bis 0,05%, |
der Rest Aluminium und zufällige Verunreinigungen.

4. Verfahren zum Löten in kontrollierter Atmosphäre nach einem der Ansprüche 1 oder 2, wobei die Fülllegierung eine Zusammensetzung aufweist, die Na-frei, Li-frei, K-frei und Ca-frei ist und besteht aus, in Gew.-%:
| | |
|---|---|
| Si | 3% bis 15% |
| Mg | 0,05% bis 0,20%, |
| Bi | 0,03% bis 0,2%, vorzugsweise 0,06 bis 0,14%, |
| Fe | 0 bis 0,4% |
| Mn | 0 bis 1,5% |
| Zn | 0 bis 0,3% |
| Cu | 0 bis 0,3% |
| Ti | 0 bis 0,15% |
| Sr | 0 bis 0,05%, |
der Rest Aluminium und zufällige Verunreinigungen.

5. Verfahren zum Löten in kontrollierter Atmosphäre nach einem der Ansprüche 1 bis 4, wobei die kontrollierte Atmosphäre ein nicht oxidierendes Gas ist, das vorzugsweise weniger als 500 ppm Sauerstoff enthält.

6. Verwendung einer Aluminium-Silizium-Fülllegierung in einem Verfahren eines Verbindens von zwei Aluminiumlegierungs-Werkstücken durch Löten in einer kontrollierten Atmosphäre ohne die Verwendung eines Flussmittels, während ein Lötblech umfassend einen Aluminiumlegierungskern, auf den an mindestens einer Seite eine Schicht einer Fülllegierung plattiert ist, verwendet wird, wobei die Füllplattierungsschicht eine Innenfläche und eine Außenfläche aufweist, wobei die Innenfläche dem Kern zugewandt ist und die Außenfläche frei von weiteren Schichten auf Metallbasis ist, und wobei der Aluminium-Silizium-Füllstoff eine Zusammensetzung aufweist, die Na-frei, Li-frei, K-frei, Ca-frei ist und umfassend in Gew.-%:
| | |
|---|---|
| Si | 3 bis 15 |
| Mg | 0,05 bis 0,20 |
| Bi | 0,03 bis 0,2 |
| Fe | 0 bis 0,4 |
| Mn | 0 bis 1,5 |
| Zn | 0 bis 0,3%, |
| Ti | 0 bis 0,2%, |
| Sr | 0 bis 0,05%, |
| Cu | 0 bis 0,3% |
der Rest Aluminium und zufällige Verunreinigungen,
wobei der Mg-Überschuss der Fülllegierung in Bezug auf die stöchiometrische Zusammensetzung von Bi2Mg3 0,05% oder weniger ist.

7. Verwendung einer Aluminium-Silizium-Fülllegierung in einem Verfahren eines Verbindens von zwei Aluminiumlegierungs-Werkstücken durch Löten in einer kontrollierten Atmosphäre ohne die Verwendung eines Flussmittels nach Anspruch 6 und wobei der Aluminium-Silizium-Füllstoff eine Zusammensetzung aufweist, die Na-frei, Li-frei, K-frei, Ca-frei ist und besteht aus, in Gew.%:
| | |
|---|---|
| Si | 3% bis 15% |
| Mg | 0,05% bis 0,20%, |
| Bi | 0,03% bis 0,2%, |
| Fe | 0 bis 0,4% |
| Mn | 0 bis 1,5% |
| Zn | 0 bis 0,3% |
| Cu | 0 bis 0,3% |
| Ti | 0 bis 0,15% |
| Sr | 0 bis 0,05%, |
der Rest Aluminium und zufällige Verunreinigungen.

8. Verwendung einer Aluminium-Silizium-Fülllegierung in einem Verfahren eines Verbindens von zwei Aluminiumlegierungs-Werkstücken durch Löten in einer kontrollierten Atmosphäre ohne die Verwendung eines Flussmittels nach Anspruch 6 und wobei der Aluminium-Silizium-Füllstoff eine Zusammensetzung aufweist, die Na-frei, Li-frei, K-frei, Ca-frei ist und besteht aus, in Gew.%:
| | |
|---|---|
| Si | 3% bis 15% |
| Mg | 0,05% bis 0,20%, |
| Bi | 0,06% bis 0,14%, |
| Fe | 0 bis 0,4% |
| Mn | 0 bis 1,5% |
| Zn | 0 bis 0,3% |
| Cu | 0 bis 0,3% |
| Ti | 0 bis 0,15% |
| Sr | 0 bis 0,05%, |
der Rest Aluminium und zufällige Verunreinigungen.

## Revendications

1. Procédé pour le brasage sous atmosphère contrôlée comprenant le brasage d'un alliage d'aluminium sans flux dans une atmosphère contrôlée en utilisant une atmosphère de gaz inerte, tout en utilisant une feuille de brasage comprenant un noyau d'alliage d'aluminium, sur au moins un côté duquel une couche d'alliage de charge est plaquée, la couche de plaquage de charge présentant une surface intérieure et une surface extérieure, la surface intérieure est tournée vers le noyau et la surface extérieure est dépourvue de toute autre couche à base de métal, et dans lequel l'alliage de charge présente une composition qui est exempte de Na, exempte de Li, exempte de K, et exempte de Ca, et comprenant, en % en poids :
Si 3 à 15,
Mg 0,05 à 0,20,
Bi 0,03 à 0,2,
Fe 0 à 0,4,
Mn 0 à 1,5,
Zn 0 à 0,3,
Ti 0 à 0,2,
Sr 0 à 0,05, et
Cu 0 à 0,3,
le reste étant de l'aluminium et des impuretés inévitables,
dans lequel l'alliage de charge présente un excès de Mg par rapport à la composition stœchiométrique de Bi₂Mg₃ de 0,05 % ou moins.

2. Procédé pour le brasage sous atmosphère contrôlée selon la revendication 1, dans lequel l'alliage de charge présente une teneur en Bi dans une plage de 0,06 % à 0,2 %, de préférence dans une plage de 0,06 % à 0,14 %.

3. Procédé pour le brasage sous atmosphère contrôlée selon l'une quelconque des revendications 1 ou 2, dans lequel l'alliage de charge présente une composition qui est exempte de Na, exempte de Li, exempte de K, et exempte de Ca, et constituée, en % en poids, de :
Si 3 % à 15 %,
Mg 0,05 % à 0,20 %,
Bi 0,03 % à 0,2 %,
Fe 0 à 0,4 %,
Mn 0 à 1,5 %,
Zn 0 à 0,3 %,
Cu 0 à 0,3 %
Ti 0 à 0,15 %,
Sr 0 à 0,05 %,
le reste étant de l'aluminium et des impuretés inévitables.

4. Procédé pour le brasage sous atmosphère contrôlée selon l'une quelconque des revendications 1 ou 2, dans lequel l'alliage de charge présente une composition qui est exempte de Na, exempte de Li, exempte de K, et exempte de Ca, et constituée, en % en poids, de :
Si 3 % à 15 %,
Mg 0,05 % à 0,20 %,
Bi 0,03 % à 0,2 %, de préférence 0,06 à 0,14 %,
Fe 0 à 0,4 %,
Mn 0 à 1,5 %,
Zn 0 à 0,3 %,
Cu 0 à 0,3 %
Ti 0 à 0,15 %,
Sr 0 à 0,05 %,
le reste étant de l'aluminium et des impuretés inévitables.

5. Procédé pour le brasage sous atmosphère contrôlée selon l'une quelconque des revendications 1 à 4, dans lequel ladite atmosphère contrôlée est un gaz non oxydant, contenant de préférence moins de 500 ppm d'oxygène.

6. Utilisation d'un alliage de charge d'aluminium-silicium dans un processus de jonction de deux pièces à usiner en alliage d'aluminium au moyen du brasage dans une atmosphère contrôlée sans utiliser de flux, tout en utilisant une feuille de brasage comprenant un noyau d'alliage d'aluminium sur au moins un côté duquel une couche d'alliage de charge est plaquée, la couche de plaquage de charge présentant une surface intérieure et une surface extérieure, la surface intérieure est tournée vers le noyau et la surface extérieure est dépourvue de toute autre couche à base de métal, et dans laquelle la charge d'aluminium-silicium présente une composition qui est exempte de Na, exempte de Li, exempte de K, et exempte de Ca, et comprenant, en % en poids :
Si 3 à 15,
Mg 0,05 à 0,20
Bi 0,03 à 0,2,
Fe 0 à 0,4,
Mn 0 à 1,5,
Zn 0 à 0,3 %,
Ti 0 à 0,2 %,
Sr 0 à 0,05 %,
Cu 0 à 0,3 %,
le reste étant de l'aluminium et des impuretés inévitables
dans laquelle l'alliage de charge présente un excès de Mg par rapport à la composition stœchiométrique de Bi2Mg3 de 0,05 % ou moins.

7. Utilisation d'un alliage de charge d'aluminium-silicium dans un processus de jonction de deux pièces à usiner en alliage d'aluminium au moyen du brasage dans une atmosphère contrôlée sans utiliser de flux, selon la revendication 6, et dans laquelle la charge d'aluminium-silicium présente une composition qui est exempte de Na, exempte de Li, exempte de K, exempte de Ca, et constituée, en % en poids, de :
Si 3 % à 15 %,
Mg 0,05 % à 0,20 %,
Bi 0,03 % à 0,2 %,
Fe 0 à 0,4 %,
Mn 0 à 1,5 %,
Zn 0 à 0,3 %,
Cu 0 à 0,3 %,
Ti 0 à 0,15 %,
Sr 0 à 0,05 %,
le reste étant de l'aluminium et des impuretés inévitables.

8. Utilisation d'un alliage de charge d'aluminium-silicium dans un processus de jonction de deux pièces à usiner en alliage d'aluminium au moyen du brasage dans une atmosphère contrôlée sans utiliser de flux, selon la revendication 6, et dans laquelle la charge d'aluminium-silicium présente une composition qui est exempte de Na, exempte de Li, exempte de K, exempte de Ca, et constituée, en % en poids, de :
Si 3 % à 15 %,
Mg 0,05 à 0,20 %,
Bi 0,06 à 0,14%,
Fe 0 à 0,4 %,
Mn 0 à 1,5 %,
Zn 0 à 0,3 %,
Cu 0 à 0,3 %,
Ti 0 à 0,15 %,
Sr 0 à 0,05 %,
le reste étant de l'aluminium et des impuretés inévitables.
